# EUROPEAN PATENT SPECIFICATION

(11) **EP 1 785 263 B1**
(45) Date of publication and mention of the grant of the patent: **11.03.2009**
(21) Application number: 06022748.5
(22) Date of filing: 31.10.2006
(51) Int. Cl.: B29D 30/60, B29D 30/30

(54) **Device to apply rubber tape**
Einrichtung zum Auflegen eines Gummibandes
Dispositif pour appliquer une bande caoutchoutée

(30) Priority: 15.11.2005 JP 2005330491
(43) Date of publication of application: 16.05.2007
(73) Proprietor: Sumitomo Rubber Industries, Ltd., Kobe-shi, Hyogo-ken (JP)
(72) Inventor: Hayashi, Norio, 3-chome, Chuo-ku, Kobe-shi, Hyogo-ken (JP); Miki, Youjirou, 3-chome, Chuo-ku, Kobe-shi, Hyogo-ken (JP)
(74) Representative: Manitz, Finsterwald & Partner GbR

(56) References cited:
- EP-A1- 0 542 431
- WO-A2-20/05009726
- DE-A1- 4 314 114
- JP-A- 59 059 432
- JP-A- 2000 326 419
- JP-A- 2003 326 611
- LU-A1- 87 565

## Description

The present invention relates to a device to apply a rubber tape to a surface of a rotating object, e.g. a drum for building a tire rubber component.

A method for manufacturing a pneumatic tire which utilizes a rubber component formed by overlap winding a narrow thin raw rubber tape in stead of a relatively wide thick raw rubber strip, has been proposed, for example, as disclosed in Japanese Patent application No.2000-94542.

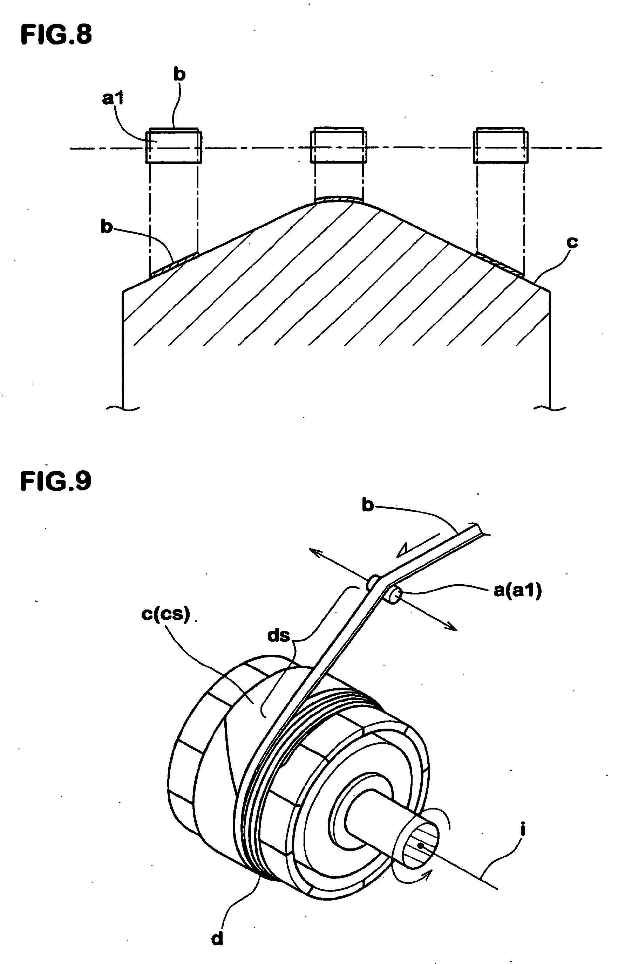

In order to make such method fit for practical use, tire manufactures makes strenuous efforts in recent years.
To realize an efficient production lines, such a narrow thin raw rubber tape has to be wound quickly and exactly.
If as shown in Fig.9, the distance (ds) between a let-off roller (a1) at the downstream end of a tape applicator (a) and the surface (cs) of the object (c) is large, it is very difficult to wind exactly. If the winding speed is increased, the thin tape (b) tends to flutter. This also makes it difficult to wind exactly.

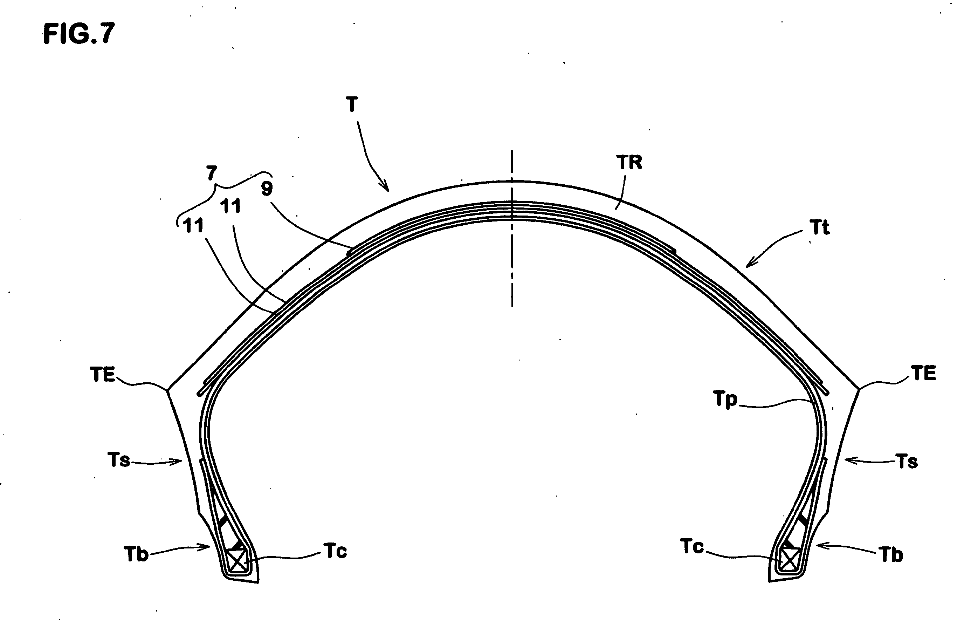

on the other hand, as shown in Fig.7, in the case of a motorcycle tire T, when compared with the passenger car tires, light truck tires and the like, the tread rubber TR is remarkably curved, when making such a curved tread rubber TR by winding a thin rubber tape, due to the inclination of the surface of the object, as shown in Fig.9, the torsional deformation of the tape existing between the downstream end and the surface becomes large.
If the above-mentioned distance is large, the tape can flexibly withstand such deformation. But, if the distance is made small to wind exactly and quickly, the tape tends to locally irregularly elongate. As a result, very small gaps or cavities tend to occur between the windings of the tape. Further, if the winding speed is increased to improve the production efficiency, the raw thin rubber tape becomes liable to break at worst due to the torsional deformation.

In addition, a rubber component, e.g. the above-mentioned tread rubber and the like usually has a variable thickness. Such a variable thickness can be achieved by varying the overlap width between the adjacent windings of the rubber tape. Accordingly, the inclination of the surface on which the tape is to be wound is varied with the progress of the winding operation.

Therefore, it is very important for obtaining the desired thickness variation, namely, the desired cross sectional shape of the rubber component that the direction of the rubber tape being let off from the tape applicator towards the surface on which the tape is to be wound (hereinafter the "let-off direction") can be adjusted with respect to the inclination of the surface.

A device according to the preamble of claim 1 is known from EP-A1-0 542 431. A similar device is disclosed by LU 87 565 A1.

An object of the present invention is therefore to provide a device to apply a rubber tape, which can let off the rubber tape at a position near the surface of the object and in a let-off direction suitable for the inclination of the surface of the object so that the tape winding speed can be increased, and the rubber tape can be wound into the target cross sectional shape as exactly as possible without causing defects such as cavities between the windings.

This object is achieved by a device having the features of claim 1.

An embodiment of the present invention will now be described in detail in conjunction with the accompanying drawings.
Fig.1 is a schematic perspective view of a device to apply a rubber tape according to the present invention.
Fig.2 is a side view of the rubber tape applying device.
Fig.3 is a side view of an apparatus for making a tread assembly for a motorcycle pneumatic tire in which the rubber tape applying device is incorporated.
Fig.4 is a diagram for explaining motions of the let-off roller when viewed from above the drum.
Fig.5 is a diagram for explaining unfavorable turning motion of the let-off roller.
Fig.6 is a side view for explaining the tape guiding direction of the applicator.
Fig.7 is a cross sectional view of an exemplary motorcycle tire.
Fig. 8 is a diagram for explaining problems in the prior art.
Fig.9 is a perspective view for explaining the prior art.

In the drawings, a device to apply a rubber tape according to the present invention (hereinafter the "tape applying device 1") is a device to feed and apply a long continuous raw rubber tape 3 to a winding surface S of a rotating object 4 and thereby to form windings 5 of the rubber tape 3 around the object 4.

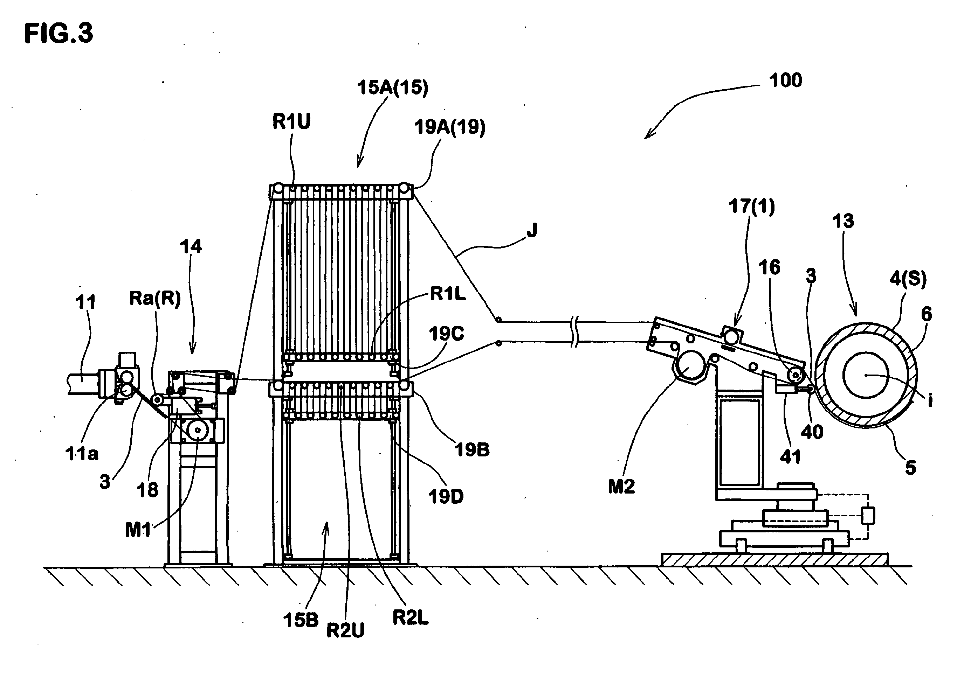

In this embodiment, as shown in Fig.3, the tape applying device 1 is incorporated in an apparatus 100 for making a tread assembly for a motorcycle pneumatic tire T, which apparatus 100 comprises: an extruder 11 for extruding raw rubber in a form of tape 3; the tape applying device 1; and a profiled drum 6.
Thus, in this embodiment, the above-mentioned rotating object 4 generically means the profiled drum 6 itself and a material previously wound around the drum 6.

Incidentally, as shown in Fig.7, the motorcycle tire T comprises: a tread portion Tt; a pair of axially spaced bead portions Tb each with a bead core TC therein; a pair of sidewall portions Ts extending between the tread edges TE and the bead portions Tb; a carcass Tp extending between the bead portions Tb; and a tread reinforcing belt 7 disposed radially outside the carcass Tp in the tread portion Tt. The tread portion Tp is curved so that the maximum tire section width lies between the tread edges TE.

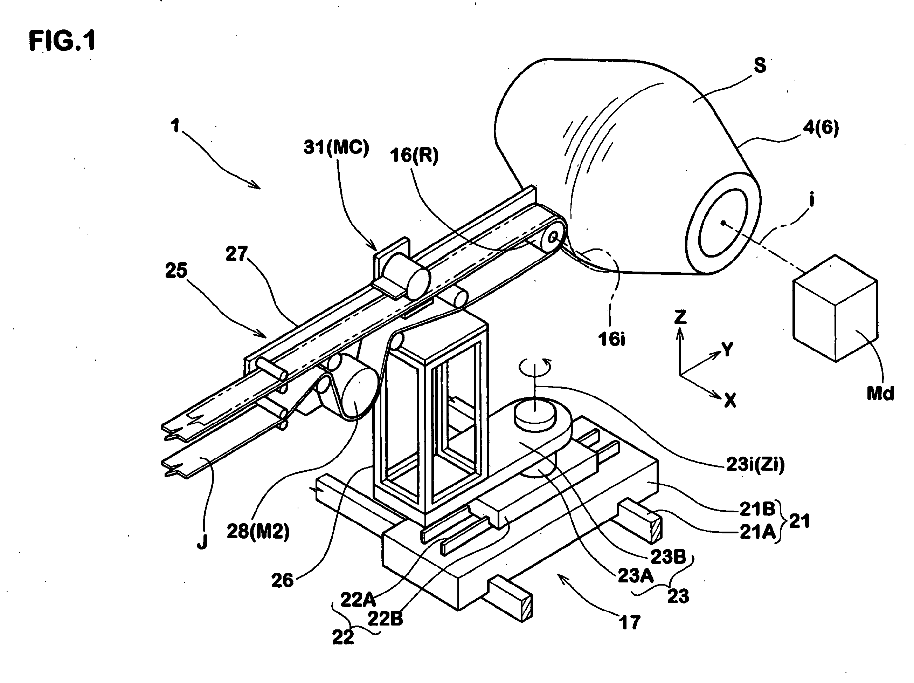

In this example, the drum 6 has, as shown in Fig.1, an outer circumferential surface S which is curved to accord with the curve of the inner surface of the tire belt 7, namely, the tread reinforcing cord layer, e.g. band such as jointless spiral band 9, breaker such as cross-ply breaker 11 and the like. Therefore, the outer diameter of the circumferential surface S of the drum 6 becomes maximum at the center of its width, and the diameter decreases continuously from the center towards each edge of the winding surface S.

To the circumferential surface S, the belt 7 is first applied or wound. Then, a raw rubber tape 3 is overlap wound on the belt 7, whereby the tread rubber TR is formed by the windings of the tape. Thus, a tread assembly of the belt 7 and tread rubber TR is formed on the drum 6.

Incidentally, in order to remove the tread assembly, the drum 6 has a collapsible structure as well known in the art. The drum 6 is rotated by a motor Md controlled by a controller CON.

The tape applying device 1 includes an endless conveyer belt J to which the raw rubber tape 3 is adhered with utilizing its tackiness.

The conveyer belt J is supported and guided by rollers R and runs between a tape receiving section 14 provided near the extruder 11 and an applicator section 17 provided near the drum 6.

In the tape receiving section 14, the raw rubber tape 3 extruded from the extruder 11 is adhered onto the conveyer belt J. In the applicator section 17, the raw rubber tape 3 is separated from the conveyer belt J at the position of the roller R on the most downstream side, and the separated tape 3 transfers to the drum. Between these sections 14 and 17, an accumulator section 15 is formed.

The tape receiving section 14 comprises a transfer roller Ra and a cylinder actuator 18. The cylinder actuator 18 is controlled by the controller CON in order to move the transfer roller Ra between two positions: a separate position at a small distance from a lower calender roller 11a of the rubber extruder 11; and a contact position at which the transfer roller Ra can contact with the lower calender roller 11a.
By moving the transfer roller Ra towards the contact position, the raw rubber tape 3 on the lower calender roller 11a is adhered to the conveyer belt J running on the transfer roller Ra. After the tape is adhered to the conveyer belt J, the transfer roller Ra returns to the separate position. Thus the tape transfers.

The accumulator section 15 comprises: a going-belt accumulator 15A for the conveyer belt J going from the extruder 11 to the drum 6; and a retuning-belt accumulator 15B for the conveyer belt J retuning from the drum 6 to the extruder 11. Each accumulator 15A, 15B is formed by a festoon of the conveyer belt J as shown in Fig.3.

In the going-belt accumulator 15A, the conveyer belt J winds between a series of upper horizontal rollers R1u and a series of lower horizontal rollers R1L. The upper horizontal rollers R1u are mounted on a fixed horizontal beam 19A of a support frame 19 in a line, whereas the lower upper horizontal rollers R1L are mounted on a vertically-movable horizontal frame 19C in a line.

In the retuning-belt accumulator 15B, similarly, the conveyer belt J winds between a series of upper horizontal rollers R2U and a series of lower upper horizontal rollers R2L. The upper horizontal rollers R2U are mounted on a fixed horizontal beam 19B of the support frame 19 in a line, whereas the lower upper horizontal rollers R2L are mounted on a vertically-movable horizontal frame 19D in a line.

The tape applying device 1 includes: a first motor M1 to drive the retuning conveyer belt J in sync with the extrusion speed of the tape which is continuously extruded from the extruder 11; and a second motor M2 to drive the going conveyer belt J intermittently, engaging with the intermittent rotation of the drum 6. The first motor M1 and second motor M2 are controlled by the controller CON.

By the rotation of driving rollers coupled with the first motor M1, the conveyer belt J is took out from the retuning-belt accumulator 15B, and the extruded rubber tape 3 is adhered thereto. Then, the conveyer belt J with the rubber tape thereon travels into the going-belt accumulator 15A.

During stopping of the rotation of the drum 6, the conveyer belt J with the rubber tape 3 thereon is accumulated in the going-belt accumulator 15A, and the conveyer belt J on which the tape is to be adhered is took out from the retuning-belt accumulator 15B.

when the rotation of the drum 6 is started, by the rotation of driving rollers coupled with the second motor M2, the conveyer belt J with the rubber tape thereon is took out from the going-belt accumulator 15A, and the rubber tape 3 is fed to the drum, leaving from the conveyer belt J running on the roller R on the most downstream side (namely, the "let-off roller 16"). Then, the conveyer belt J returns to the retuning-belt accumulator 15B.

As shown in Fig.1, the applicator section 17 comprises: (1) a traverser 21 to move the let-off roller 16 in an x-axis direction parallel with the rotational axis (i) of the object 4 or drum 6; (2) a radial shifter 22 to move the let-off roller 16 in a Y-axis direction perpendicular to the x-axis direction so as to be able to come close and come away from the object 4; and (3) a tilter 23 to turn the let-off roller 16 around a reference axis zi so as to be able to incline towards either side of a reference line xj, wherein the reference line xj is parallel to the x-axis direction, and the reference axis zi is parallel to a Z-axis direction perpendicular to the x-axis direction and the Y-axis direction.

The traverser 21 comprises: lateral guide rails 21A laying in the X-axis direction; and a main carriage 21B on the lateral guide rails 21A. The main carriage 21B is movable in the X-axis direction by a driving mechanism engaged with a motor Mx, utilizing for example a ball screw, gears, power transmission belt and the like. By moving the main carriage 21B, the let-off roller 16 can traverse the entire width of the drum 6. The moving speed, moving distance and moving direction of the main carriage 21B can be completely controlled by controlling the rotation of the motor Mx with the controller CON.

The radial shifter 22 comprises: radial guide rails 22A laying in the Y-axis direction and fixed to the main carriage 21B; and a sub carriage 22B on the radial guide rails 22A. The sub carriage 22B is movable in the Y-axis direction by a similar driving mechanism engaged with a motor My, utilizing for example a ball screw, gears, power transmission belt and the like. By moving the sub carriage 22B forwards, the let-off roller 16 approaches the drum 6. The moving speed, moving distance and moving direction of the sub carriage 22B relative to the main carriage 21B can be completely controlled by controlling the rotation of the motor My with the controller CON.

The tilter 23 comprises: a support shaft 23A extending uprightly from the sub carriage 22B; and a turning bed 23B supported by the support shaft 23A turnably around the axis 23i of the shaft 23A. In this example, the axis 23i of the support shaft 23A defines the above-mentioned reference axis zi.
The turning bed 23B is engaged with a motor Mz through a transmission (not shown). The turning speed, turning angle and turning direction of the turning bed 23B can be completely controlled by controlling the rotation of the motor Mz with the controller CON. Incidentally, the turning angle is detected by an angle sensor such as an encoder or the like and based on the output of the sensor the turning angle is determined by the controller CON.

As another alternative arrangement, it is also possible to exchange the positions of the traverser 21 and radial shifter 22, namely, to arrange the main carriage 21B above the sub carriage 22B, and the turning bed 23B is provided on the carriage 21B.

In the turning bed 23B in this example, a table-like frame 26 is disposed thereon, and a tape guide 25 is arranged on the frame 26 so as to position at almost same height as the rotational axis the drum. The tape guide 25 in this example comprises: a platy support arm 27 fixed to the top of the table-like frame 26; and a plurality of rollers R horizontally mounted on the support arm 27.

The rollers R include: the above-mentioned let-off roller 16 disposed at the front end of the support arm 27; and a large-diameter driving roller 28 for driving the conveyer belt J coupled with the above-mentioned second motor M2.

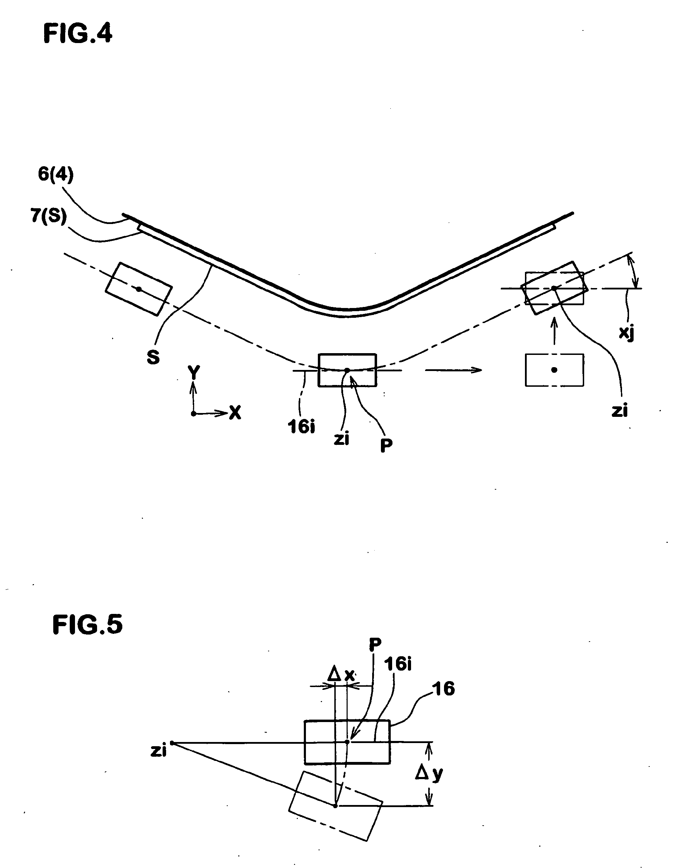

In this embodiment, the rotational axis 16i of the let-off roller 16 is positioned within a standard plane 29 which is a plane 4S perpendicular to the Z-axis direction and including the rotational axis (i) of the drum 6. In other words, the plane 4S (standard plane 29) which includes both of the axis 16i and the axis (i) is perpendicular to the Z-axis direction. Accordingly, within the standard plane 29, the notational axis 16i of the let-off roller 16 can move in both of the x-axis direction (traverse direction) and the Y-axis direction (back-and-forth direction towards the rotational axis of the drum), and also can turn around the reference axis zi, as shown in Fig.4.

The controller CON can control the motions of the traverser 21, radial shifter 22 and tilter 23 so that the rotational axis 16i of the let-off roller 16 becomes substantially parallel with the profile line of the winding surface S which appears in the standard plane 29, while moving in the x-axis and Y-axis directions.

It is preferable that as shown in Fig.4, the reference axis zi passes through the bisecting point P of the width of the let-off roller 16, more specifically, the bisecting point P of the length of the rotational axis 16i of the let-off roller 16. If the reference axis zi does not pass through the bisecting point P, as shown in Fig.5, errors delta x and delta y of the point P in the x-axis direction and Y-axis direction vary according to the turning angle, and thus it becomes necessary to compute and control the feeding speed of the tape, taking account of the variable errors as the traverser 21 and radial shifter 22 move in the x-axis and Y-axis directions.

Here, the let-off roller 16 is wider than the conveyer belt J, and the conveyer belt J is wider than the rubber tape. The diameter of the let-off roller 16 is considerably small when compared with the diameter of the drum. For example, the diameter of the let-off roller 16 is less than 20 % of the drum diameter.

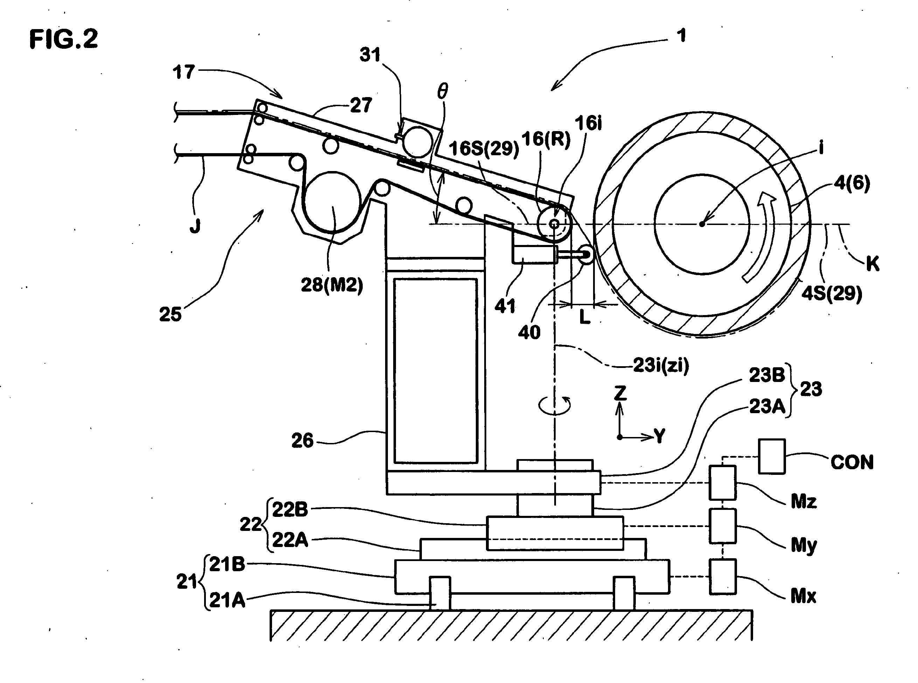

As shown in Fig.2, the distance L between the winding surface S and the surface of the conveyer belt J on the let-off roller 16 is not more than 20 mm, preferably not more than 15 mm, more preferably not more than 10 mm, but not less than 3 mm, preferably not less than 5 mm, more preferably not less than 7 mm. If the distance L is more than 20 mm, it becomes difficult to control the overlapping width exactly. If the distance L is less than 3.0 mm, disorder such as constriction is liable to occur at the winding start end of the rubber tape 3.

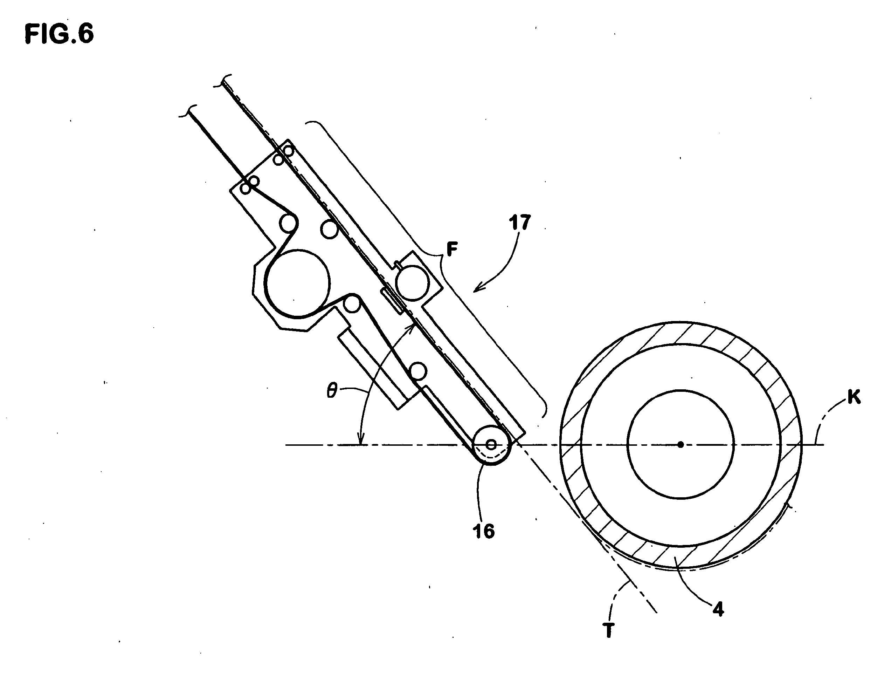

As shown in Fig.6, in a part F before the let-off roller 16, the going conveyer belt J runs for a certain distance at a constant angle theta with respect to a reference plane K,
wherein the reference plane K is a plane including the axis 16i of the let-off roller 16 and the rotational axis (i) of the object 4. Thus, in the vertical plane perpendicular to the rotational axis (i) of the object 4, the reference plane K is a straight line drawn between the axis 16i and axis (i) as shown in Fig.3.

By providing this straight part F, the residual stress and strain of the rubber tape can be reduced during running this part F. To derive this effect, it is preferable that the length of this straight part F is about 60 to 100 cm.

In view of smooth transfer and adhesion of the winding start end of the rubber tape to the surface s, the angle theta is preferably not less than 20 degrees, more preferably not less than 30 degrees, but not more than 70 degrees, preferably not more than 60 degrees, more preferably not more than 50 degrees. It is most preferable that the extension T of the straight part F is tangent to the winding surface S and the rubber tape 3 runs along this line, as shown in Fig.6.

In this embodiment, a tape cutter 31 is disposed in this straight part F. The tape cutter 31 has a rotary blade of which rotation by a motor Mc is controlled by the controller CON so as to be able to cut the rubber tape on the moving conveyer belt J.

Further, the applicator section 17 comprises a presser roller 40, at least the surface of which is formed by a spongy material which can make elastic deformation easily.
The presser roller 40 is rotatably horizontally supported by a holder attached to the end of the rod of a cylinder actuator 41 mounted on the support arm 27. By activating the cylinder actuator 41 by supplying high-pressure air, the presser roller 40 can press the rubber tape 3 against the winding surface s. The presser roller 40 is used at least at one point when the winding start end of the rubber tape 3 is adhered to the winding surface S. Also, it is possible to use it all the time during winding in order to press the rubber tape 3 against the winding surface S. This cylinder actuator 41 is also controlled by the controller CON.

The above-mentioned controller CON is a computer which comprises a central processing unit, memory, input and output devices (such as keyboard, display, printer) and the like as well known in the art. The driving units of the above-mentioned motors Md, M1, M2, Mx, My, Mz, Mc and actuators 18, 41 are connected to the computer through interface adapters. Further, various sensors for detecting the turning angle and position of the let-off roller 16, and sensors for the rubber tape at various positions and the like are also connected to the computer through interface adapters.
Thus, the controller CON can operate the tape applying device 1 according to the program stored in the memory and the outputs of the sensors.

### Comparison Tests

using the above-mentioned apparatus shown in Fig.3, various tread assembles were made by restricting the motions of the traverser 21, radial shifter 22 and tilter 23 as shown in Table 1. For example, by restricting the motions of the radial shifter 22 and tilter 23, the tape applying device 1 can simulate the prior art device shown in Figs.8 and 9. The tread assembly Ref.1 was made in this way.

In each case, a rubber tape 3 was wound on a belt previously wound on the drum. The width of the winding surface of the drum was 185 mm. The difference (Dc-Ds) between the diameter Dc of the winding surface at the center and the diameter Ds at the edges was 120 mm.

using such tread assemblies, motorcycle pneumatic tires (tire size 190/55R17) were made. And the tires were checked for tire uniformity (radial force variation) and defects of the tread rubber (namely, windings of the rubber tape) at the tread surface.

### (1) uniformity Test

using a tire tester, the radial force variation RFV (Over all) was measured according to the Japanese Automobile Standards organization JASO-C607, "Testing method for automobile tire uniformity". In this test, with respect to each test tire, 30 pieces were measured and the average value was obtained. The results are shown in Table 1.

### (2) Defect in the tread surface

In this test too, with respect to each test tire, 30 pieces were prepared and visually checked for bareness of rubber (namely, lack of rubber) on the tread surface and evaluated into three ranks A, B and C as follows. The number of tires in each rank was counted. The results are shown in Table 1.
A: there was no defect
B: negligible
C: unacceptable

**Table 1**

| | Ref.1 | Ref.2 | Ex. 1 | Ex.2 | Ex.3 | Ex.4 | Ex.5 | Ex.6 |
|---|---|---|---|---|---|---|---|---|
| Let-off roller | | | | | | | | |
| Traversal motion(X-axis) | yes | yes | yes | yes | yes | yes | yes | yes |
| Radial motion (Y-axis) | no | no | yes | no | no | yes | no | yes |
| Turning motion(Z-axis) | no | yes | yes | no | yes | yes | yes | yes |
| Distance L (mm) | 10 | 10 | 10 | 7 | 15 | 20 | 25 | 10 |
| Use of Presser roller | no | no | no | no | no | no | no | yes |
| Uniformity (N) | 51 | 48 | 42 | 40 | 41 | 44 | 45 | 38 |
| Defect in tread surface | | | | | | | | |
| Rank A | 24 | 26 | 29 | 30 | 30 | 29 | 28 | 30 |
| Rank B | 3 | 3 | 1 | 0 | 0 | 1 | 2 | 0 |
| Rank C | 3 | 1 | 0 | 0 | 0 | 0 | 0 | 0 |

## Claims

1. A device (1) to apply a rubber tape (3) to a surface (S) of a rotating object (4), comprising:
a conveying element (J) for conveying the rubber tape (3);
a let-off roller (16) as the most downstream side roller (R) on which the conveying element (J) runs and from which the rubber tape (3) is let off towards the object;
a traverser (21) to move the let-off roller (16) in an x-axis direction which is parallel to the rotational axis (i) of the object (4);
a radial shifter (22) to move the let-off roller (16) in a Y-axis direction which is perpendicular to the X-axis direction;
a tilter (23) to turn the rotational axis (16i) of the let-off roller (16) around a reference axis (Zi) which is parallel to a Z-axis direction perpendicular to the X-axis direction and Y-axis direction;
said conveying element (J) provided with a substantially straight part (F) extending for a certain distance from the let-off roller (16) to the upstream side thereof at a substantially constant inclination angle theta of more than 0 but not more than 70 degrees with respect to a reference plane (K) including the rotational axis (16i) of the let-off roller (16) and the rotational axis (i) of the object (4),
**characterized by** the conveying element being a conveyer belt (J) and in that said tilter (23) comprises:
a frame work (23B, 26, 27) including a support arm (27) and supported turnably around said reference axis (Zi); and
a plurality of tape guide rollers (R) mounted on the support arm (27),
the tape guide rollers (R) include:
said let-off roller (16) disposed at a front end of the support arm (27); and
a roller (28) on the upstream side thereof
so that said substantially straight part (F) of the conveyer belt (J) is formed between the roller (28) on the upstream side and the let-off roller (16),
whereby the substantially straight part (F) is turnable around said reference axis (Zi) together with the let-off roller (16).

2. The device according to claim 1, wherein said conveyer belt (J) is an endless belt
to which the raw rubber tape (3) is adherable by a tackiness of the raw rubber tape, and
which is driven by a motor (M1) and runs between a tape applicator section (17) and a tape receiving section (14) provided near an extruder (11) for the raw rubber tape (3), and
an accumulator section (15) is formed between the tape applicator section (17) and the tape receiving section (14), the accumulator section (15) comprising a going-belt accumulator (15A) and a retuning-belt accumulator (15B).

3. The device according to claim 1 or 2, wherein said substantially straight part (F) is provided with a tape cutter (31),
the tape cutter (31) has a rotary blade which is rotatable by a motor (MC) controlled so as to be able to cut the rubber tape on the moving conveyer belt (J).

4. The device according to claim 1, wherein
the let-off roller (16) is supported movably such that the rotational axis (16i) thereof stays within the reference plane (29).

5. The device according to claim 4, wherein
the reference plane (29) is perpendicular to the Z-axis direction.

6. The device according to claim 1, wherein
said reference axis (Zi) passes through the bisecting point (P) of the length of the rotational axis (16i) of the let-off roller (16).

7. The device according to claim 1, which further comprises
a presser roller (40) for pressing the let-off rubber tape (3) against the surface (S) of the object.

8. An apparatus for making a rubber component of a pneumatic tire, comprising:
the device to apply a rubber tape (3) to a surface (S) of a rotating object (4) as set force in any one of claims 1-7; and
a profiled drum (6) as the rotating object (4).

9. The apparatus according to claim 8, wherein
said rubber component of a pneumatic tire is the tread rubber of a motorcycle tire (T), and the drum (6) has a profile which is substantially same as that of the inner surface of the tread portion (Tt) of the tire (T).

10. The apparatus according to claim 8, wherein
the distance between the surface (S) of the object (4) and the surface of the conveyer belt (J) on the let-off roller (16) is not more than 20 mm but not less than 3 mm.

11. The apparatus according to claim 8, wherein
the distance between the let-off roller (16) and the surface (S) of the object (4) is such that the extension of said substantially straight part (F) is substantially tangent to the surface (S) of the object (4).

12. The apparatus according to claim 8, which further comprises an extruder (11) for extruding the rubber tape (3).

13. The apparatus according to claim 8, wherein
the distance between the let-off roller (16) and the surface (S) of the object (4) is such that the length of an unsupported part of the rubber tape (3) between the separating point from the conveyer belt (J) and the contacting point with the surface (S) of the object (4) is not more than 20 mm.

## Patentansprüche

1. Vorrichtung (1) zum Auflegen eines Kautschukbandes (3) auf eine Oberfläche (S) eines rotierenden Objektes (4), umfassend:
ein Förderelement (J) zum Fördern des Kautschukbandes (3);
eine Auslasswalze (16) als die Walze (R) auf der am weitesten unterstromigen Seite, auf der das Förderelement (J) läuft und von der das Kautschukband (3) in Richtung des Objektes ausgelassen wird;
eine Traversiereinrichtung (21), um die Auslasswalze (16) in einer X-Achsen-Richtung zu bewegen, die parallel zu der Drehachse (i) des Objektes (4) liegt;
eine Radialverschiebungseinrichtung (22), um die Auslasswalze (16) in einer Y-Achsen-Richtung zu bewegen, die senkrecht zu der X-Achsen-Richtung liegt;
eine Kippeinrichtung (23) zum Drehen der Drehachse (16i) der Auslasswalze (16) um eine Bezugsachse (Zi), die parallel zu der Z-Achsen-Richtung und senkrecht zu der X-Achsen-Richtung und der Y-Achsen-Richtung liegt;
wobei das Förderelement (J) mit einem im Wesentlichen geraden Teil (F) versehen ist, der sich über einen bestimmten Abstand von der Auslasswalze (16) zu der oberstromigen Seite davon unter einem im Wesentlichen konstanten Neigungswinkel Theta von mehr als 0 aber nicht mehr als 70 Grad in Bezug auf eine Bezugsebene (K) erstreckt, die die Drehachse (16i) der Auslasswalze (16) und die Drehachse (i) des Objektes (4) umfasst,
**dadurch gekennzeichnet, dass** das Förderelement ein Förderband (J) ist, und dass die Kippeinrichtung (23) umfasst:
ein Rahmengestell (23B, 26, 27), das einen Stützarm (27) umfasst und drehbar um die Bezugsachse (Zi) abgestützt ist; und
eine Vielzahl von Bandführungswalzen (R) die an dem Stützarm (27) montiert sind,
wobei die Bandführungswalzen (R) umfassen:
die Auslasswalze (16), die an einem vorderen Ende des Stützarms (27) angeordnet ist; und
eine Walze (28) an der oberstromigen Seite davon,
sodass der im Wesentlichen gerade Teil (F) des Förderbandes (J) zwischen der Walze (28) auf der oberstromigen Seite und der Auslasswalze (16) gebildet ist,
wobei der im Wesentlichen gerade Teil (F) zusammen mit der Auslasswalze (16) um die Bezugsachse (Zi) drehbar ist.

2. Vorrichtung nach Anspruch 1,
wobei das Förderband (J) ein Endlosband ist,
an welchem das Rohkautschukband (3) durch eine Klebrigkeit des Rohkautschukbandes anhaften kann, und
das von einen Motor (M1) angetrieben ist und zwischen einem Bandauflegerabschnitt (17) und einem Bandaufnahmeabschnitt (14) läuft, der in der Nähe eines Extruders (11) für das Rohkautschukband (3) vorgesehen ist, und
ein Sammelabschnitt (15) zwischen dem Bandauflegerabschnitt (17) und dem Bandaufnahmeabschnitt (14) gebildet ist, wobei der Sammelabschnitt (15) einen Sammler (15A) für weggehendes Band und einen Sammler (15B) für zurückkehrendes Band umfasst.

3. Vorrichtung nach Anspruch 1 oder 2,
wobei der im Wesentlichen gerade Teil (F) mit einer Bandschneideeinrichtung (31) versehen ist,
wobei die Bandschneideeinrichtung (31) ein rotierendes Messer aufweist, das von einem Motor (MC) gedreht werden kann, der derart gesteuert ist, dass er in der Lage ist, das Kautschukband auf dem sich bewegenden Förderband (J) zu schneiden.

4. Vorrichtung nach Anspruch 1,
wobei die Auslasswalze (16) derart beweglich abgestützt ist, dass ihre Drehachse (16i) innerhalb der Bezugsebene (29) bleibt.

5. Vorrichtung nach Anspruch 4,
wobei die Bezugsebene (29) senkrecht zu der Z-Achsen-Richtung liegt.

6. Vorrichtung nach Anspruch 1, wobei
die Bezugsachse (Zi) durch den Halbierungspunkt (P) der Länge der Drehachse (16i) der Auslasswalze (16) verläuft.

7. Vorrichtung nach Anspruch 1, die ferner
eine Druckwalze (40) zum Drücken des ausgelassenen Kautschukbandes (3) gegen die Oberfläche (S) des Objektes umfasst.

8. Vorrichtung zum Herstellen einer Kautschukkomponente eines Luftreifens, umfassend:
die Einrichtung zum Auflegen eines Kautschukbandes (3) auf eine Oberfläche (S) eines rotierenden Objektes (4) nach einem der Ansprüche 1 bis 7; und
eine profilierte Trommel (6) als das rotierende Objekt (4).

9. Vorrichtung nach Anspruch 8, wobei
die Kautschukkomponente eines Luftreifens der Laufflächenkautschuk eines Motorradreifens (T) ist, und die Trommel (6) ein Profil aufweist, das im Wesentlichen gleich ist wie das der Innenoberfläche des Laufflächenabschnitts (Tt) des Reifens (T).

10. Vorrichtung nach Anspruch 8, wobei
der Abstand zwischen der Oberfläche (S) des Objektes (4) und der Oberfläche des Förderbandes (J) auf der Auslasswalze (16) nicht größer als 20 mm aber nicht kleiner als 3 mm ist.

11. Vorrichtung nach Anspruch 8, wobei
der Abstand zwischen der Auslasswalze (16) und der Oberfläche (S) des Objektes (4) derart ist, dass die Verlängerung des im Wesentlichen geraden Teils (F) im Wesentlichen tangential zu der Oberfläche (S) des Objektes (4) liegt.

12. Vorrichtung nach Anspruch 8,
die ferner einen Extruder (11) zum Extrudieren des Kautschukbandes (3) umfasst.

13. Vorrichtung nach Anspruch 8, wobei
der Abstand zwischen der Auslasswalze (16) und der Oberfläche (S) des Objektes (4) derart ist, dass die Länge eines nicht abgestützten Teils des Kautschukbandes (3) zwischen dem Trennungspunkt von dem Förderband (J) und dem Kontaktpunkt mit der Oberfläche (S) des Objektes (4) nicht größer als 20 mm ist.

## Revendications

1. Dispositif (1) pour appliquer une bande en caoutchouc (3) sur une surface (S) d'un objet en rotation (4), comprenant :
un élément de convoyage (J) pour convoyer la bande en caoutchouc (3) ;
un rouleau distributeur (16) à titre de rouleau latéral (R) le plus en aval, sur lequel l'élément de convoyage (J) circule et depuis lequel la bande en caoutchouc (3) est distribuée vers l'objet ;
un dispositif traversant (21) pour déplacer le rouleau distributeur (16) dans une direction d'axe X qui est parallèle à l'axe de rotation (i) de l'objet (4) ;
un dispositif de décalage radial (22) pour déplacer le rouleau distributeur (16) dans une direction d'axe Y qui est perpendiculaire à la direction de l'axe X ;
un dispositif de basculement (23) pour faire tourner l'axe de rotation (16i) du rouleau distributeur (16) autour d'un axe de référence (Zi) qui est parallèle à une direction d'axe Z perpendiculaire à la direction d'axe X et à la direction d'axe Y ;
ledit élément de convoyage (J) étant pourvu d'une partie sensiblement rectiligne (F) qui s'étend sur une certaine distance depuis le rouleau distributeur (16) vers le côté amont de celui-ci sous un angle d'inclinaison θ sensiblement constant supérieur à 0° mais non supérieur à 70° par rapport à un plan de référence (K) qui inclut l'axe de rotation (16i) du rouleau distributeur (16) et l'axe de rotation (i) de l'objet (4),
**caractérisé en ce que** l'élément de convoyage est une courroie de convoyage (J), et **en ce que** ledit dispositif de basculement (23) comprend :
un cadre (23B, 26, 27) qui inclut un bras de support (27) et qui est supporté de manière à pouvoir tourner autour dudit axe de référence (Zi) ; et
une pluralité de rouleaux de guidage de bande (R) montés sur le bras de support (27) ;
dans lequel les rouleaux de guidage de bande (R) incluent :
ledit rouleau distributeur (16) est disposé à une extrémité frontale du bras de support (27) ; et
un rouleau (28) sur le côté amont de celui-ci
de sorte que ladite partie sensiblement rectiligne (F) de la courroie de convoyage (J) est formée entre le rouleau (28) sur le côté amont et le rouleau distributeur (16),
grâce à quoi la partie sensiblement rectiligne (F) est capable de tourner autour dudit axe de référence (Zi) ensemble avec le rouleau distributeur (16).

2. Dispositif selon la revendication 1, dans lequel ladite courroie de convoyage (J) est une courroie sans fin
sur laquelle la bande en caoutchouc brut (3) est capable d'adhérer par le pouvoir collant de la bande en caoutchouc brut, et
qui est entraînée par un moteur (M1) et qui circule entre un poste de d'application de bande (17) et un poste de réception de bande (14) prévu au voisinage d'une extrudeuse (11) pour la bande en caoutchouc brut (3), et
un poste accumulateur (15) est formé entre le poste d'application de bande (17) et le poste de réception de bande (14), le poste accumulateur (15) comprenant un accumulateur pour la bande sortante (15A) et un accumulateur pour la bande qui revient (15B).

3. Dispositif selon la revendication 1 ou 2, dans lequel ladite partie sensiblement rectiligne (F) est pourvue d'un organe de coupe de bande (31),
l'organe de coupe de bande (31) comprend une lame rotative qui est mise en rotation par un moteur (MC) commandé de manière à être capable de couper la bande en caoutchouc sur la bande de convoyage (J) en mouvement.

4. Dispositif selon la revendication 1, dans lequel le rouleau distributeur (16) est supporté de façon mobile de telle façon que son axe de rotation (16i) reste dans le plan de référence (29).

5. Dispositif selon la revendication 4, dans lequel le plan de référence (29) est perpendiculaire à la direction de l'axe Z.

6. Dispositif selon la revendication 1, dans lequel ledit axe de référence (Zi) passe par le point bissecteur (P) de la longueur de l'axe de rotation (16i) du rouleau distributeur (16).

7. Dispositif selon la revendication 1, comprenant en outre un rouleau presseur (40) pour presser la bande en caoutchouc distribuée (3) contre la surface (S) de l'objet.

8. Appareil pour réaliser un composant en caoutchouc d'un bandage pneumatique, comprenant :
le dispositif pour appliquer une bande en caoutchouc (3) sur une surface (3) d'un objet en rotation (4) comme énoncé dans l'une quelconque des revendications 1 à 7 ; et
un tambour profilé (6) à titre d'objet en rotation (4).

9. Appareil selon la revendication 8, dans lequel ledit composant en caoutchouc d'un bandage pneumatique est la bande en caoutchouc pour le roulement d'un pneumatique de motocyclette (T), et le tambour (6) possède un profil qui est sensiblement le même que celui de la surface intérieure de la portion de bande de roulement (Tt) du pneumatique (T).

10. Appareil selon la revendication 8, dans lequel la distance entre la surface (S) de l'objet (4) et la surface de la courroie de convoyage (J) sur le rouleau distributeur (16) n'est pas supérieure à 20 mm mais non inférieure à 3 mm.

11. Appareil selon la revendication 8, dans lequel la distance entre le rouleau distributeur (16) et la surface (S) de l'objet (4) est telle que l'extension de ladite partie sensiblement rectiligne (F) est sensiblement tangente à la surface (S) de l'objet (4).

12. Appareil selon la revendication 8, comprenant en outre une extrudeuse (11) pour extruder la bande en caoutchouc (3).

13. Appareil selon la revendication 8, dans lequel la distance entre le rouleau distributeur (16) et la surface (S) de l'objet (4) est telle que la longueur d'une partie non supportée de la bande en caoutchouc (3) entre le point de séparation depuis la courroie de convoyage (J) et le point de contact avec la surface (S) de l'objet (4) n'est pas supérieure à 20 mm.
